# EUROPÄISCHE PATENTANMELDUNG

(11) **EP 4 360 783 A1**
(43) Veröffentlichungstag der Anmeldung: **01.05.2024**
(21) Anmeldenummer: 22204347.3
(22) Anmeldetag: 28.10.2022
(51) Int. Cl.: B23B 31/30, B23B 29/034

(54) **WERKZEUGSYSTEM**

(71) Anmelder: CERATIZIT Besigheim GmbH, 74354 Besigheim (DE)
(72) Erfinder: GIEHL, Axel, 74354 Besigheim (DE); SCHMID, Steffen, 74354 Besigheim (DE)
(74) Vertreter: Ciesla, Dirk

(57) **Zusammenfassung**

Aufsteckelement (2, 1101, 1102, 2000), einen Trägerkörper (3, 1103) und ein in dem Trägerkörper (3, 1103) oder in dem Aufsteckelement (2, 1101, 1102, 2000) ausgebildetes Hydrodehnelement (8, 1108), wobei das einschneidige Aufsteckelement (2, 1101, 1102) einem antriebsdrehachsenzentrierbaren und durchmesserverstellbaren Schneidflugkreis (501, 502) folgend schneidbar auf den Trägerkörper (3, 1103) aufsteckbar ist, indem der Trägerkörper (3, 1103) außenumfangsseitig einem bezüglich des Schneidflugkreises (501, 502) exzentrischen Außenträgerkreis (900, 1900a, 1900b) folgend ausgeformt ist.

## Beschreibung

Die vorliegende Erfindung betrifft ein Werkzeugsystem, umfassend ein einschneidiges Aufsteckelement und einen Trägerkörper.

Die EP 1 013 368 A2 zeigt ein Werkzeug zur spanabtragenden Bearbeitung eines Werkstücks. Das Werkzeug weist eine Messerplatte auf. Die Halterung der Messerplatte ist so an einem Exzenter angebracht, dass bei einer Drehung des Exzenters einerseits die Halterung entlang einer gedachten bogenförmigen Bahn bewegt wird und andererseits ihren Abstand gegenüber der Mittelachse des Werkzeugs verändert, damit also eine Radialbewegung durchführt. Der Exzenter ist über eine Umsetzeinrichtung mit einer Betätigungseinrichtung derart gekoppelt, dass bei einer Aktivierung der Betätigungseinrichtung eine Drehbewegung des Exzenters erfolgt. Dazu umfasst die Umsetzeinrichtung mindestens zwei miteinander kämmende Gewindeelemente.

Bei dem aus der EP 1 013 368 A2 bekannten Werkzeug benötigt die Drehung des Exzenters einen komplizierten und mit einem Getriebespiel behafteten Getriebemechanismus. Dadurch büßt die Radialbewegung an Präzision ein und steigern sich der Wartungsaufwand und die Herstellkosten.

Die Aufgabe der vorliegenden Erfindung besteht darin, ein Werkzeugsystem bereitzustellen, das bezüglich eines einstellbaren Schneidflugkreises konstruktiv einfach, bedienerfreundlich und zugleich hochpräzise ausgebildet ist.

Die technische Aufgabe der vorliegenden Erfindung wird gelöst durch den Gegenstand von Anspruch 1. Vorteilhafte Weiterbildungen der Erfindung sind den abhängigen Ansprüchen zu entnehmen, die untereinander frei kombinierbar sind.

Das Werkzeugsystem umfasst ein einschneidiges Aufsteckelement, einen Trägerkörper und ein in dem Trägerkörper oder in dem Aufsteckelement ausgebildetes Hydrodehnelement, wobei das Aufsteckelement auf den Trägerkörper aufsteckbar und gegenüber diesem jeweils reversibel lösbar verdrehsicherbar und durch das Hydrodehnelement reversibel lösbar auszugssicherbar ist, wobei das einschneidige Schneidelement einem antriebsdrehachsenzentrierbaren und durchmesserverstellbaren Schneidflugkreis folgend schneidbar auf den Trägerkörper aufsteckbar ist, indem der Trägerkörper außenumfangsseitig einem bezüglich des Schneidflugkreises exzentrischen Außenträgerkreis folgend ausgeformt ist.

Indem der Schneidflugkreis "antriebsdrehachsenzentrierbar" ist, hat der Schneidflugkreis sein Zentrum in einer Antriebsdrehachse bezüglicher derer der Trägerkörper drehantriebbar ausgebildet ist.

Indem das Aufsteckelement einschneidig ist, ist dem Aufsteckelement geometrisch ein maximal äußerer Schneidpunkt zugeordnet, der einer Drehung des Trägerkörpers bezüglich einer Antriebsdrehachse folgt, wenn das Aufsteckelement auf den Trägerkörper aufgesteckt und verdrehgesichert ist, und so bei einer 360°-Drehung den Schneidflugkreis bezüglich seines Zentrums und seines Durchmessers festlegt, das Zentrum liegt also auf der Antriebsdrehachse und der Durchmesser beträgt das Zweifache des radialen Abstands vom Schneidpunkt zur Antriebsdrehachse. Wird der radialen Abstand folglich verstellt, verstellt sich der Durchmesser des Schneidflugkreises.

Indem derTrägerkörper außenumfangsseitig einem bezüglich des Schneidflugkreises exzentrischen Außenträgerkreis folgend ausgeformt ist, wird der Schneidflugkreis durch eine konstruktiv einfache, von außen direkt betätigbare und damit bedienerfreundliche Verdrehung des Aufsteckelements gegenüber dem Trägerkörper verstellt, wenn das Aufsteckelement auf den Trägerkörper aufgesteckt und verdrehentsichert ist. Der beschriebene radiale Abstand des Schneidpunkts wird also bei der Verdrehung des Aufsteckelements geändert und nach gewünschter Beendigung der Verdrehung fixiert, indem das Aufsteckelement verdrehgesichert wird.

Indem der Trägerkörper außenumfangsseitig einem bezüglich des Schneidflugkreises exzentrischen Außenträgerkreis folgend ausgeformt ist und der Schneidflugkreis antriebsdrehachsenzentriert ist, ist der Außenträgerkreis auch bezüglich der beschriebenen Antriebsdrehachse exzentrisch angeordnet.

Indem derTrägerkörper außenumfangsseitig einem bezüglich des Schneidflugkreises exzentrischen Außenträgerkreis folgend ausgeformt ist, lässt sich der Trägerkörper ausgehend von einem außenumfangsseitig zylindrischen Trägerrohkörper herstellen, indem der Trägerrohkörper bezüglich einer entsprechenden Zylinderachse kreisförmig exzentrisch ausgeformt wird, wobei der Trägerkörper bezüglich der Zylinderachse drehantreibbar ist.

Das Hydrodehnelement sorgt in einem gespannten Zustand für eine reversible, elastische und radiale Verformung des Trägerkörpers beziehungsweise des Aufsteckkörpers, so dass der Trägerkörper und das Aufsteckelement elastisch reversibel miteinander verspannbar sind.

Das Aufsteckelement kann durch das Hydrodehnelement und/oder durch einen Formschluss zwischen dem Aufsteckelement und dem Trägerkörper reversibel lösbar verdrehsicherbar sein.

Gemäß einer vorteilhaften Weiterbildung hat der Trägerkörper einen Innenträgerumfang zum Einstecken eines Einsteckschafts, wobei das Hydrodehnelement in dem Trägerkörper und/oder ein weiteres Hydrodehnelement in dem Trägerkörper zur Bereitstellung einer reversibel lösbaren Auszugshemmung aufseiten des Innenträgerumfangs ausgebildet ist.

Indem dem Trägerkörper den Innenträgerumfang zum Einstecken des Einsteckschafts hat, erweitert sich das mögliche Bearbeitungsfeld des Werkzeugsystems um ein mit dem Einsteckschaft versehendes Werkzeug, wobei das Hydrodehnelement zusätzlich und/oder das weitere Hydrodehnelement für die entsprechende Auszugssicherung sorgt beziehungsweise sorgen. Ersteres spart aufgrund der damit verbundenen Ausnutzung bereits vorhandener Elemente des Werkzeugsystems Kosten und reduziert zugleich den konstruktiven Aufwand.

Gemäß einer vorteilhaften Weiterbildung ist der Innenträgerumfang einem Innenträgerkreis folgend und sich entlang von einer des bezüglich Innenträgerkreises zentrierten Antriebsdrehachse erstreckend ausgeformt. Damit ist die radiale Lage der Antriebsdrehachse durch den Mittelpunkt des Innenträgerkreis definiert und der Außenträgerkreis damit bezüglich des Innenträgerkreis exzentrisch angeordnet.

Gemäß einer vorteilhaften Weiterbildung umfasst das Werkzeugsystem eine Messvorrichtung zum Ablesen eines auf einem Durchmesser des Schneidflugkreises basierenden Messwerts. Dies verbessert das Werkzeugsystem dahingehend, dass der Schneidflugkreis auf Basis des Messwerts für einen Bediener direkt ablesbar ist.

Gemäß einer vorteilhaften Weiterbildung umfasst die Messvorrichtung ein in Messabschnitte unterteiltes Skalenelement und ein Zeigerelement, wobei das Skalenelement relativ zu dem Zeigerelement drehbar ist, wenn das Aufsteckelement gegenüber dem Trägerkörper verdrehentsichert ist, wobei der Messwert durch die Summe der durch das Zeigerelement bezüglich einer Referenzdrehstellung überstrichenen Messabschnitte ablesbar bemessen ist.

Die Messvorrichtung ist in dieser vorteilhaften Weiterbildung Bestandteil von dem Aufsteckelement und dem Trägerkörper, was die Messvorrichtung kostengünstig macht.

Gemäß einer vorteilhaften Weiterbildung umfasst das Werkzeugsystem ein durch mehrere zueinander beabstandete Einsteckausnehmungen gebildetes Einsteckprofil und ein Einsteckelement, wobei das Einsteckprofil in oder auf dem Aufsteckelement und das Einsteckelement in oder auf dem Trägerkörper ausgebildet ist oder umgekehrt, wobei das Einsteckelement in mindestens zwei oder mehr Einsteckausnehmungen von den Einsteckausnehmungen einsteckbar ist, wobei das Einsteckprofil einem dem Schneidflugkreis konzentrischen Einsteckkreis folgend ausgebildet ist. Dadurch ist der Schneidflugkreis auf vorgegebene Durchmesserstufen stufenweise einstellbar.

Gemäß einer vorteilhaften Weiterbildung ist das Einsteckelement reversibel lösbar in oder auf dem Aufsteckelement beziehungsweise dem Trägerkörper gehaltert. So kann das Einsteckelement reversibel lösbar entfernt werden, so dass der Schneidflugkreis dementsprechend wahlweise stufenlos verstellbar ist.

Gemäß einer vorteilhaften Weiterbildung ist der Außenträgerkreis gegenüber dem Schneidflugkreis in einem Bereich von 0,005 mm bis 0,1 mm exzentrisch angeordnet. Dadurch wird eine Feinverstellung des Schneidflugkreises bereitgestellt.

Gemäß einer vorteilhaften Weiterbildung umfasst das Werkzeugsystem ein weiteres Aufsteckelement, wobei das weitere Aufsteckelement auf den Trägerkörper aufsteckbar und gegenüber diesem jeweils reversibel lösbar verdrehsicherbar und reversibel lösbar auszugssicherbar ist, wobei das weitere Aufsteckelement einem weiteren durchmesserverstellbaren sowie bezüglich des Schneidflugkreises konzentrischen Schneidflugkreis folgend schneidbar auf den Trägerkörper aufsteckbar ist, indem der Trägerkörper außenumfangsseitig einem bezüglich des weiteren Schneidflugkreises exzentrischen weiteren Außenträgerkreis folgend ausgeformt ist. Das Werkzeugsystem wird dadurch zweischneidig und einem einheitlichen Schneidflugkreis schneidbar gemacht, wobei der einheitliche Schneidflugkreis durch eine Verdrehung der Aufsteckelemente zueinander bezüglich einer Antriebsdrehachse zentrierbar ist.

Gemäß einer vorteilhaften Weiterbildung sind der weitere Schneidflugkreis und der Schneidflugkreis auf betragsmäßig gleiche Durchmesser einstellbar.

Gemäß einer vorteilhaften Weiterbildung hat das Aufsteckelement ein reversibel lösbares Schneidelement. Dadurch kann das Schneidelement besonders einfach montiert und demontiert werden. Aufgrund des verstellbaren Schneidflugkreises können dabei auftretende radiale Abweichungen von einer radialen Soll-Position des Schneidelements besonders einfach und zugleich präzise kompensiert werden.

Gemäß einer vorteilhaften Weiterbildung hat das Aufsteckelement einen Aufsteckkelchkörper und einen Kelchstielschaft, wobei der Aufsteckkelchkörper auf den Trägerkörper aufsteckbar ist, wobei der Kelchstielschaft einschneidig ausgebildet ist. Dadurch kann das Werkzeugsystem auch im Bereich eines Bohrungsgrunds schneiden, wobei der Kelchstielschaft dabei in die Bohrung hineingesteckt ist.

Gemäß einer vorteilhaften Weiterbildung ist das Aufsteckelement auf den Trägerkörper aufgesteckt und gegenüber diesem jeweils reversibel lösbar verdrehgesichert und durch das Hydrodehnelement reversibel lösbar auszugsgesichert, wobei der Schneidflugkreis bezüglich einer Antriebsdrehachse des Werkzeugsystems zentriert und durchmesserverstellbar auf den Trägerkörper dort aufgesteckt ist, wo der Trägerkörper außenumfangsseitig dem bezüglich des Schneidflugkreises exzentrischen Außenträgerkreis folgend ausgeformt ist. Nach dieser Weiterbildung befindet sich das Werkzeugsystem in einem bezüglich des Aufsteckelements aufgesteckten Zustand und kann so direkt verwendet werden.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: ein Werkzeugsystem nach einer ersten Ausführungsform in einer perspektivischen Darstellung;
- Fig. 2:: das Werkzeugsystem nach der ersten Ausführungsform in einer Längsschnitt-Darstellung;
- Fig. 3:: ein Aufsteckelement von dem Werkzeugsystem nach der ersten Ausführungsform in einer perspektivischen Darstellung;
- Fig. 4:: das Aufsteckelement gemäß Fig. 3 in einer weiteren perspektivischen Darstellung;
- Fig. 5:: einen Trägerkörper von dem Werkzeugsystem nach der ersten Ausführungsform in einer perspektivischen Darstellung;
- Fig. 6:: einen Außenträgerkreis und weitere dem Werkzeugsystem nach der ersten Ausführungsform zugeordnete Kreise;
- Fig. 7:: ein Werkzeugsystem nach einer zweiten Ausführungsform in einer perspektivischen Darstellung;
- Fig. 8:: das Werkzeugsystem nach der zweiten Ausführungsform in einer Stirnseiten-Darstellung;
- Fig. 9:: das Werkzeugsystem nach der zweiten Ausführungsform in einer Längsschnittdarstellung;
- Fig. 10:: das Werkzeugsystem nach der zweiten Ausführungsform in einer perspektivischen Explosionsdarstellung;
- Fig. 11:: zwei dem Werkzeugsystem nach der zweiten Ausführungsform zugeordnete Außenträgerkreise;
- Fig. 12:: ein weiteres Aufsteckelement in einer perspektivischen Darstellung.

### Ausführungsformen

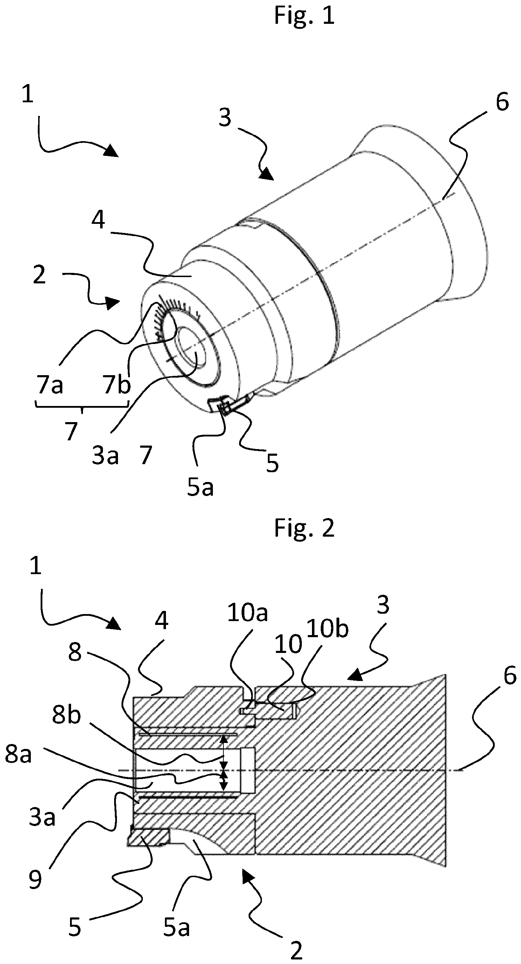

Fig. 1 zeigt ein Werkzeugsystem 1 nach einer ersten Ausführungsform in einer perspektivischen Darstellung. Das Werkzeugsystem 1 umfasst ein einschneidiges Aufsteckelement 2 und einen Trägerkörper 3. Das Aufsteckelement 2 ist auf den Trägerkörper 3 aufgesteckt und gegenüber dem Trägerkörper 3 reversibel lösbar verdrehgesichert und reversibel auszugsgesichert und damit dementsprechend auf den Trägerkörper 3 aufsteckbar und gegenüber diesem jeweils reversibel lösbar verdrehsicherbar und reversibel lösbar auszugssicherbar.

Das Aufsteckelement 2 ist einschneidig, indem das Aufsteckelement 2 an einem durch einen Plattensitz 5a unterbrochenen Außenumfang 4 des Aufsteckelements 2 ein Schneidelement 5 hat.

Der Trägerkörper 3 erstreckt sich entlang von einer Antriebsdrehachse 6, die aufgrund der bezüglich der Antriebsdrehachse 6 transparenten Darstellung in Fig. 1 auch im Bereich des Werkzeugsystems 1 ersichtlich ist.

Der Trägerkörper 3 hat einen bezüglich der Antriebsdrehachse 6 zentrierten Innenträgerumfang 3a, der in Blickrichtung parallel zur Antriebsdrehachse 6 einer Kreisform folgt. In den Innenträgerumgang 3a ist ein Einsteckschaft von einem Einsteckwerkzeug einsteckbar, so dass der Einsteckschaft gegenüber dem Trägerkörper 3 reversibel lösbar verdrehsicherbar und reversibel auszugsichbar einsteckbar ist.

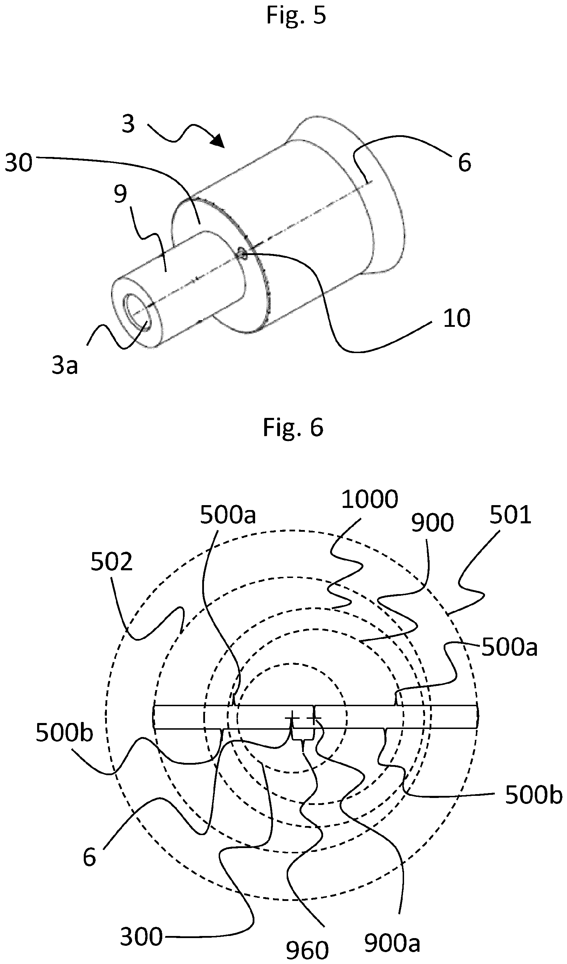

Wenn das Aufsteckelement 2 verdrehentsichert ist, kann das Aufsteckelement 2 relativ zu dem Trägerkörper 3 bezüglich der Antriebsdrehachse 6 gedreht werden, wobei ein radialer Abstand des Schneidelements 5 dadurch bezüglich der Antriebsdrehachse 6 verstellt wird; auf den entsprechenden radialen Verstellmechanismus wird Bezug nehmend auf Fig. 6 eingegangen.

Wenn der Trägerkörper 3 bezüglich der Antriebsdrehachse 6 drehangetrieben wird, bewegt sich das Schneidelement 5 auf einer Kreisbahn, also auf einem Schneidflugkreisdurchmesser, der den durch das Schneidelement 5 herstellbaren maximalen Durchmesser einer Bohrung entspricht.

Wenn das Aufsteckelement 2 eine nach dem gewünschten radialen Abstand bemessene Verdrehlage erreicht und damit auf einen gewünschten Schneidflugkreisdurchmesser verstellt ist, kann das Aufsteckelement 2 verdrehgesichert werden und unter dem so durchmesserverstellten Schneidflugkreisdurchmesser die beschriebene Bohrung oder eine weitere Bohrung bearbeiten.

Das Werkzeugsystem 1 umfasst ferner eine Messvorrichtung 7 zum Ablesen des durch die beschriebene Veränderung der Verdrehlage veränderten Schneidflugkreisdurchmessers. Die Messvorrichtung 7 hat dafür eine stirnseitig ablesbare sowie in Messabschnitte unterteilte Messskala 7a, die stirnseitig in dem Aufsteckelement 4 eingeprägt ist, und einen in den Trägerkörper 3 stirnseitig eingeprägten Messstrich 7b, also ein Zeigerelement. Wenn das Aufsteckelement 2 gegenüber dem Trägerkörper 3 verdreht wird, wird die Messskala 7a relativ zu dem Messstrich 7b ablesbar verdreht, so dass aus der entsprechenden Verdrehlage zwischen dem Messstrich 7b und der Messskala 7a die, je nach Verdrehrichtung, positive beziehungsweise negative Veränderung eines Ausgangsdurchmessers des Schneidflugkreises ablesbar ist.

Fig. 2 zeigt das Werkzeugsystem 1 in einem Längsschnitt. Die Antriebsdrehachse 6 erstreckt sich in dem Längsschnitt gemäß Fig. 2. In Fig. 2 ist besonders gut zu erkennen, wie das Aufsteckelement 2 reversibel lösbar verdrehgesichert und auszugsgesichert ist und wie der Innenträgerumfang 3a eine reversibel lösbare Auszugssicherung bereitstellt.

Das Werkzeugsystem 1 umfasst nämlich ferner ein Hydrodehnelement 8, das in einem das Aufsteckelement 2 tragenden Zapfenabschnitt 9 des Trägerkörpers 3 ausgebildet. Das Hydrodehnelement 8 ist in Form von einer sich entlang sowie umfänglich bezüglich der Antriebsdrehachse 6 erstreckenden Druckkammer ausgebildet, wobei die Druckkammer und damit das Hydrodehnelement 8 gegenüber der Antriebsdrehachse 6 exzentrisch angeordnet sind, so dass das Hydrodehnelement 8 einen bezüglich der Antriebsdrehachse 6 veränderlichen radialen Abstand hat, der von einem in Fig. 2 gezeigten minimalen radialen Abstand 8a in Umfangsrichtung auf einen maximalen radialen Abstand 8b zunimmt. Unter dem minimalen radialen Abstand 8a verformt das Hydrodehnelement 8 in einem druckbeaufschlagten Zustand den Zapfenabschnitt 9 stärker aufseiten des Innenträgerumfangs 3a als aufseiten des Aufsteckelements 2, wodurch der Trägerkörper 3 eine reversibel lösbare Auszugshemmung aufseiten des Innenträgerumfangs 3a bereitstellt. Unter dem maximalen radialen Abstand 8b verformt das Hydrodehnelement 8 in dem druckbeaufschlagten Zustand den Zapfenabschnitt 9 stärker aufseiten des Aufsteckelements 2 als aufseiten des Innenträgerumfangs 3a, wodurch der Trägerkörper 3 eine reversibel lösbare Auszugshemmung aufseiten und bezüglich des Aufsteckelements 2 bereitstellt.

Das Werkzeugsystem 1 umfasst ferner ein als Passstift ausgeformtes Einsteckelement 10, welches sich entlang von der Antriebsdrehachse 6 erstreckt und in eine Einsteckausnehmung 10b des Trägerkörpers 3 reversibel lösbar und in eine Einsteckausnehmung 10a des Aufsteckelements 2 reversibel lösbar eingesteckt ist, so dass das Aufsteckelement 2 gegenüber dem Trägerkörper 3 verdrehgesichert ist und mit diesem gemeinsamen bezüglich der Antriebsdrehachse 2 drehbar ist. Denkbar und auch möglich ist es aber auch, dass eine solche Verdrehsicherung ohne das Einsteckelement 10 realisiert ist, indem die durch das Hydrodehnelement 8 realisierte Auszugshemmung des Aufsteckelements 2 eine Verdrehung des Aufsteckelements 2 gegenüber dem Trägerkörper 3 verdrehsichernd hemmend ist.

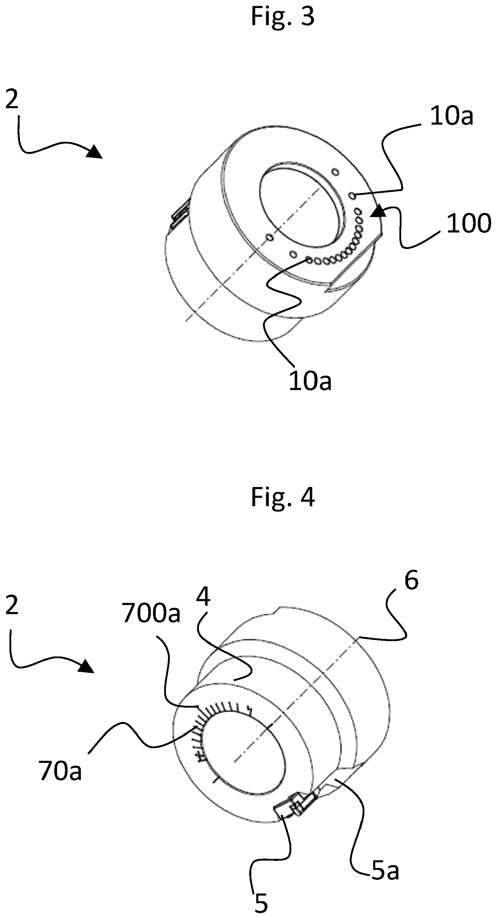

Fig. 3 und Fig. 4 zeigen das Aufsteckelement 2 perspektivisch jeweils in Alleinstellung. Fig. 3 aufseiten der Einsteckausnehmung 10a und Fig. 4 aufseiten der Messskala 7a.

In Fig. 3 ist ersichtlich, dass mehrere bezüglich der Einsteckausnehmung 10a analoge Einsteckausnehmungen 10a ein Einsteckprofil 100 in dem Aufsteckelement 2 bilden. Die Einsteckausnehmungen 10a und damit das Einsteckprofil 100 folgen einem bezüglich der Antriebsdrehachse 7 zentrierten Kreis. Somit kann das Aufsteckelement 2 in mehrere, dem umfänglichen Abstand der Einsteckausnehmungen 10 folgende Verdrehlagen jeweils reversibel lösbar verdrehgesichert werden, wofür das Aufsteckelement 2 auszugsentsichert, axial von dem Einsteckprofil 100 und dem Einsteckelement 10 weggeschoben, einem zu den umfänglichen Abstand der Einsteckausnehmungen 10 passenden Verdrehwinkel verdreht und bezüglich des Einsteckelements 10 in die entsprechende Einsteckausnehmung 10a eingesteckt wird. Folglich ist der Schneidflugkreisdurchmesser stufenweise verstellbar, wobei jede entsprechende Schneidflugkreisdurchmesserstufe zu einer der Einsteckausnehmungen 10a gehört. Die Einsteckausnehmungen 10a sind umfänglich so zueinander beabstandet, dass der zwischen zwei benachbarten Einsteckausnehmungen 10 bezüglich der Drehachse 6 in Blickrichtung parallel zur Drehachse 6 bemessene Winkel zu einer betragsmäßig gleichen inkrementellen Durchmesserverstellung des Schneidflugkreises gehört.

In Fig. 4 ist die Messskala 7a besonders gut ersichtlich. Die Messskala 7a hat mehrere Messabschnittsstriche 70a, die sich umfänglich beidseitig von einem Referenzstrich 700a erstrecken. Wenn der Referenzmesstrich 700a mit dem Messtrich 7b fluchtet, hat der Schneidflugkreisdurchmesser einen vorgegebenen Betrag, zum Beispiel 50 mm. Wenn der Messstrich 7b mit einem der Messabschnittsstriche 70a fluchtet, hat der Schneidflugkreisdurchmesser einen bezüglich des vorgegebenen Betrags abgestuften größeren oder kleineren Betrag, je nach Verdrehrichtung.

Fig. 5 zeigt den Trägerkörper 3 perspektivisch in Alleinstellung. In Fig. 5 ist der Zapfenabschnitt 9 besonders gut ersichtlich und dass der Trägerkörper 3 eine bezüglich der Antriebsdrehachse 6 sich quer erstreckende Anschlagsfläche 30 hat, aus der das Einsteckelement 10 herausragt und gegen die das Aufsteckelement 2 anschlägt, so dass das Aufsteckelement 2 durch letzteres reproduzierbar axial positionierbar ist.

Der Zapfenabschnitt 9 ist im Bereich des Aufsteckelements 2 in Blickrichtung parallel zur Antriebsdrehachse 6 außenumfangsseitig einem bezüglich der Antriebsdrehachse 6 exzentrischen Außenträgerkreis 900 folgend ausgeformt.

Fig. 6 zeigt den Außenträgerkreis 900 exemplarisch in Blickrichtung parallel zur Antriebsdrehachse 6. Der Außenträgerkreis 900 hat in Blickrichtung parallel zur Antriebsdrehachse 6 ein Zentrum 900a, das gegenüber der Antriebsdrehachse 6 in Blickrichtung parallel zur Antriebsdrehachse 6 radial versetzt ist, also exzentrisch ist, wie Fig. 6 zeigt.

Das Schneidelement 5 ist in Blickrichtung parallel zur Antriebsdrehachse 6 bezüglich des Zentrums 900a unter einem konstanten radialen Abstand 500a bezüglich des Zentrums 900a sowie unter einem veränderlichen radialen Abstand 500b bezüglich der Antriebsdrehachse 6 drehbar gelagert, wenn das Aufsteckelement 5 drehentsichert ist. Ersteres, weil das Aufsteckelement 3 ebenfalls dem Außenträgerkreis 900 folgend ausgebildet ist, wo es zumindest abschnittsweise auf den Zapfenabschnitt 9 aufgesteckt ist.

Fig. 6 zeigt bezüglich von zwei in Blickrichtung parallel zur Antriebsdrehachse 6 um 180° umfänglich beabstandeten Verdrehlagen des Schneidelements 5, dass bei der exemplarisch dargestellten Exzentrizität des Außenträgerkreises 900 bezüglich der Antriebsdrehachse 6 der radiale Abstand 500a betragsmäßig gleichbleibt und dass der radiale Abstand 500b von einem betragsmäßigen Minimum (links in Fig. 6) auf ein betragsmäßiges Maximum zunimmt (rechts in Fig. 6) und nach gewähltem umfänglichen Abstand der Einsteckausnehmungen 10 zueinander stufenweise zwischen diesem Minimum und diesem Maximum, einschließlich auf dieses Minimum und auf dieses Maximum, wahlweise fixierbar ist.

Der so eingestellte und dann fixierte radiale Abstand 500b bestimmt den beschriebenen Schneidflugkreisdurchmesser des Schneidelements 5. Fig. 6 zeigt den zum maximalen radialen Abstand 500b gehörenden Schneidflugkreis 501 und den zum minimalen radialen Abstand 500b gehörenden Schneidflugkreis 502. Die Schneidflugkreise 501 und 502 sind bezüglich der Antriebsdrehachse 6 zentriert, womit der Außenträgerkreis 900 bezüglich der Schneidflugkreise 501 und 502 und jedes weiteren einstellbaren Schneidflugkreises exzentrisch angeordnet ist.

Fig. 6 zeigt ferner einen Innenträgerkreis 300, der bezüglich der Antriebsdrehachse 6 zentriert ist und dem der Innenträgerumfang 3a in Blickrichtung parallel zur Antriebsdrehachse 6 folgt, so dass der Außenträgerkreis 900 damit auch bezüglich des Innenträgerkreises 300 exzentrisch angeordnet ist.

Fig. 6 zeigt ferner einen bezüglich des Außenträgerkreises 900 konzentrischen Einsteckkreis 1000, dem die Einsteckausnehmungen 10a des Einsteckprofils 100 in Blickrichtung parallel zur Antriebsdrehachse 6 folgend ausgebildet sind.

Fig. 6 zeigt ferner, dass das Zentrum 900a, also ein Drehmittelpunkt bei der beschriebenen Verdrehung des Aufsteckelements 2, und die Antriebsdrehachse 6 einen radialen Abstand 960 haben, der exemplarisch im Bereich von 0,005 mm bis 0,1 mm liegt.

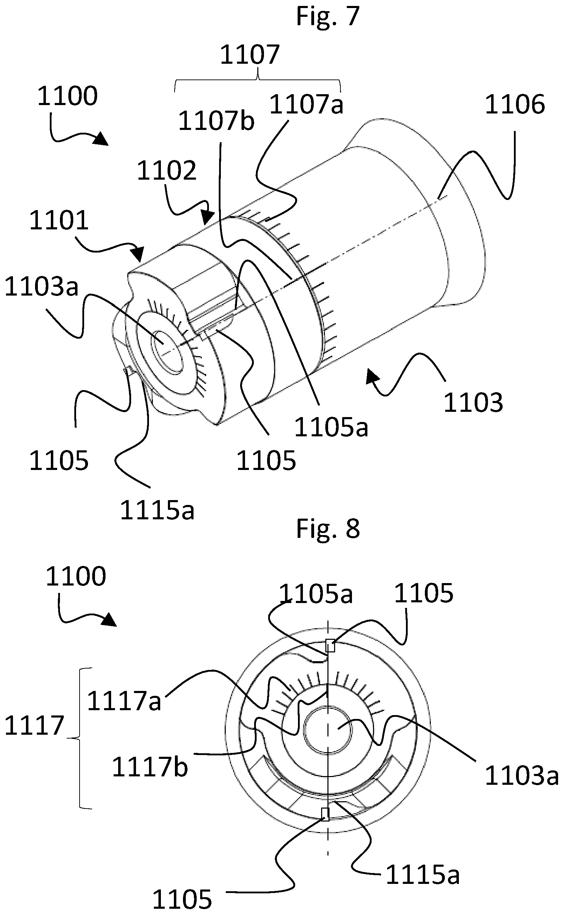

Fig. 7 zeigt ein Werkzeugsystem 1100 nach zweiten Ausführungsform in einer perspektivischen Darstellung.

Das Werkzeugsystem 1101 umfasst ein einschneidiges Aufsteckelement 1102, ein weiteres einschneidiges Aufsteckelement 1102 und einen Trägerkörper 1103.

Die Aufsteckelemente 1101 und 1102 sind auf den Trägerkörper 1103 aufgesteckt und gegenüber dem Trägerkörper 1103 analog zu dem Aufsteckelement 2 reversibel lösbar verdrehgesichert und reversibel lösbar auszugsgesichert und damit dementsprechend auf den Trägerkörper 1103 aufsteckbar und gegenüber diesem jeweils reversibel lösbar verdrehsicherbar und reversibel lösbar auszugssicherbar.

Die Aufsteckelemente 1101 und 1102 sind jeweils einschneidig, indem das Aufsteckelement 1101 ein in einem Plattensitz 1105a reversibel lösbar befestigtes Schneidelement 1105 und indem das Aufsteckelement 1102 ein in einem Plattensitz 1115a reversibel lösbar befestigtes Schneidelement 1105 hat.

Die Schneidelemente 1105 sind dem Schneidelement 5 analog durchmesserverstellbar, und zwar bezüglich der zur Antriebsdrehachse 6 analogen Antriebsdrehachse 1106 des Werkzeugsystems 1100.

Die Stirnseitendarstellung des Werkzeugsystems 1100 in Fig. 8 zeigt, dass die Schneidelemente 1105 in radialer Richtung bezüglich der Antriebsdrehachse 1106 diametral zueinander angeordnet sind.

Der Trägerkörper 1103 hat außenumfangsseitig außerhalb der Aufsteckelemente 1101 und 1102 eine in Messabschnitte unterteilte Messskala 1107a und das bezüglich dem Aufsteckelement 1101 axial hintere Aufsteckelement 1102 hat außenumfangsseitig einen Messstrich 1107b, so dass die Messskala 1107a und der Messstrich 1107b eine der Messvorrichtung 7 analoge Messvorrichtung 1107 zum Ablesen einer Schneidflugkreisverstellung bezüglich des Schneidelements 1105 vom Aufsteckelement 1102 bilden.

Der Trägerkörper 1103 hat stirnseitig eine in Messabschnitte unterteilte Messskala 1177a und das bezüglich dem Aufsteckelement 1102 axial vordere Aufsteckelement 1101 hat stirnseitig einen Messstrich 1177b, so dass die Messskala 1177a und der Messstrich 1177b eine der Messvorrichtung 7 analoge Messvorrichtung 1177 zum Ablesen einer Schneidflugkreisverstellung bezüglich des Schneidelements 1105 vom Aufsteckelement 1101.

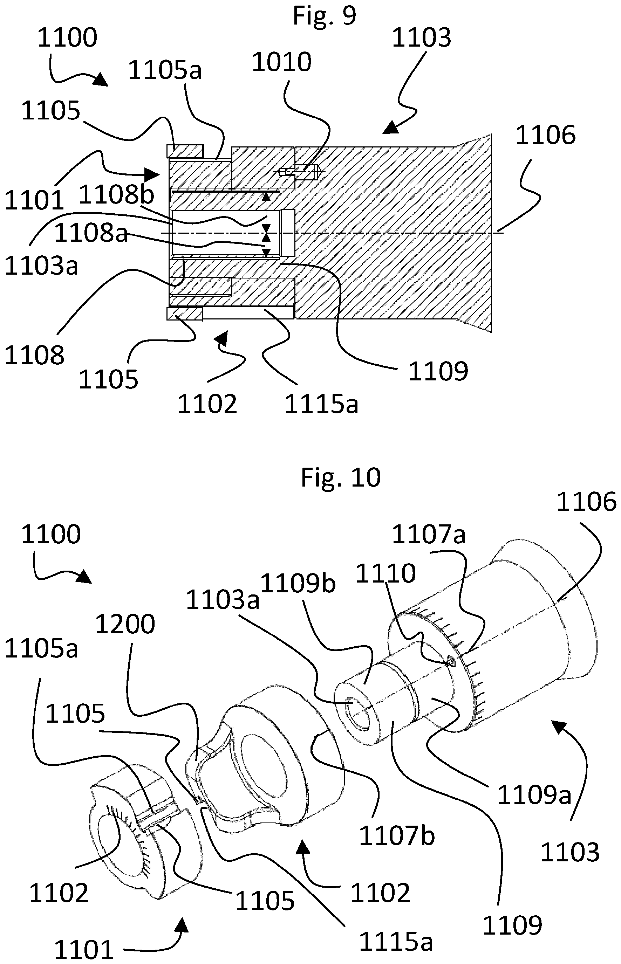

Fig. 9 zeigt einen Längsschnitt des Werkzeugsystems 1100 analog zu dem Längsschnitt des Werkzeugsystems 1. Die Antriebsdrehachse 1106 erstreckt sich in dem Längsschnitt gemäß Fig. 9.

In Fig. 9 ist ersichtlich, dass die Aufsteckelemente 1101 und 1102 auf einen Zapfenabschnitt 1109 des Trägerkörpers 1103 aufgesteckt sind. In dem Zapfenabschnitt 1109 erstreckt sich analog zu dem Zapfenabschnitt 9 ein dem Hydrodehnelement 8 analoges Hydrodehnelement 1108, das wie das Hydrodehnelement 8 so zur Antriebsdrehachse 1106 exzentrisch angeordnet ist, dass es einen in Umfangsrichtung bezüglich der Antriebsdrehachse 1106 veränderlichen radialen zur Antriebsdrehachse 1106 hat, der von einem minimalen radialen Abstand 1108a auf einen maximalen radialen Abstand 1108b bei einem 180° Umlauf bezüglich der Antriebsdrehachse 1106 zunimmt. Dadurch kann das Hydrodehnelement 1108 den Zapfenabschnitt 1109 in radialer Richtung unterschiedlich stark verformen, wenn das Hydrodehnelement 1108 druckbeaufschlagt ist. Am minimalen radialen Abstand 1108a wird der Zapfenabschnitt 1109 am stärksten aufseiten eines dem Innenträgerumfang 3 analogen Innenträgerumfangs 1103 verformt, so dass der Innenträgerumfang 1103 eine Auszugsicherung bereitstellt, und am maximalen radialen Abstand 1108b wird der Zapfenabschnitt 1109 am stärksten aufseiten der Aufsteckelemente 1101 und 1102 verformt, so dass die Aufsteckelemente 1101 und 1102 auszugsgesichert sind.

Das Aufsteckelement 1102 ist dem Aufsteckelement 2 analog durch ein dem Einsteckelement 10 analoges Einsteckelement 1010 reversibel lösbar verdrehgesichert, wobei das Aufsteckelement 1102 ein aus mehreren Einsteckausnehmungen dem Einsteckprofil 10 analoges Einsteckprofil hat, also stufenweise bezüglich des Schneidflugkreise verstellbar ist.

Das Aufsteckelement 1101 kann ebenfalls durch ein dem Einsteckelement 1010 analoges Einsteckelement reversibel lösbar verdrehgesichert werden, wobei das Einsteckelement dann in dem Aufsteckelement 1102 reversibel lösbar gehaltert wäre. Exemplarisch wird das Aufsteckelement 1101 aber durch das Hydrodehnelement 1108 reversibel lösbar verdrehgesichert, in dem die durch die Auszugssicherung bereitgestellte Verformung des Zapfenabschnitts 1109 auch für eine Verdrehsicherung ausreichen kann.

In Fig. 9 ist besonders gut ersichtlich, dass die Schneidelemente 1105 radial und axial über den Zapfenabschnitt 1109 überstehen, wie dies auf für die Schneidelemente 5 der Fall ist, und so entsprechend in Umfangsrichtung bezüglich der Antriebsdrehachse 1106 und in axialer Richtung bezüglich der Antriebsdrehachse 1106 schneiden können.

In der Explosionsdarstellung des Werkzeugsystems 1100 gemäß Fig. 10 ist besonders gut ersichtlich, dass das Aufsteckelement 1102 einen axial vorstehenden Wandungsabschnitt 1200 hat, in welchem der Plattensitz 1115a ausgebildet ist, wobei der Wandungsabschnitt 1200 in dem gemäß Fig. 7 aufgesteckten Zustand des Werkzeugsystems 1100 das Aufsteckelement 1101 abschnittweise umfänglich umgibt, so dass die Schneidelemente 1105 der Aufsteckelemente 1101 und 1102, wie in Fig. 9 ersichtlich, bezüglich der Antriebsdrehachse 1106 axial in gleicherweise über den Zapfenabschnitt 1109 vorstehen.

In Fig. 9 ist ferner ersichtlich, dass der Zapfenabschnitt 1109 eine axiale hintere Trägerfläche 1109a und eine axiale vordere Trägerfläche 1109b hat. Auf der Trägerfläche 1109a ist das Aufsteckelement 1102 und auf der Trägerfläche 1109b ist das Aufsteckelement 1101 aufgesteckt.

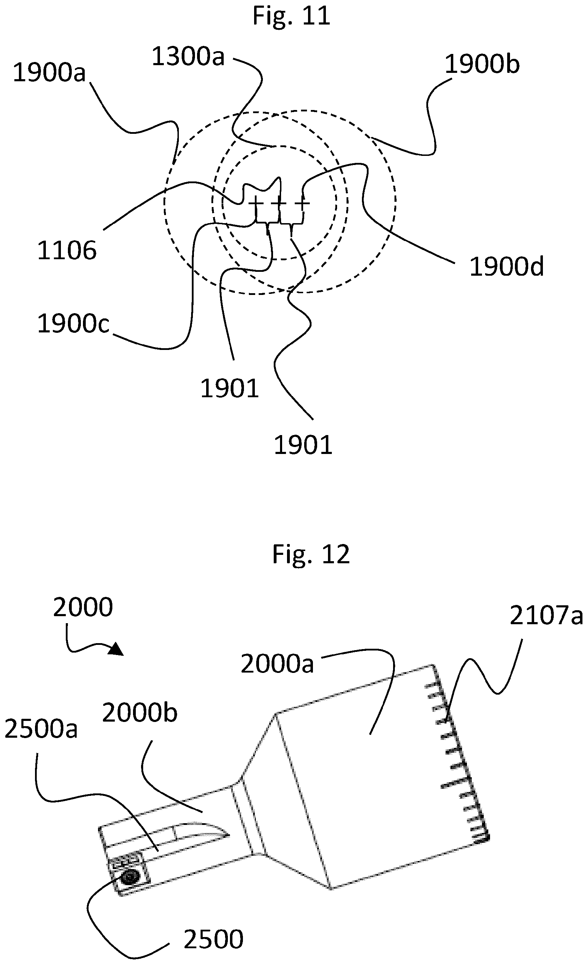

Die Trägerflächen 1109a und 1109b folgen in Blickrichtung parallel zur Antriebsdrehachse 1106 jeweils dem Außenträgerkreis 900 analogen Außenträgerkreisen 1900a beziehungsweise 1900b, die in Fig. 11 exemplarisch dargestellt sind, womit die Außenträgerkreise 1900a und 1900b bezüglich der Antriebsdrehachse 1106 jeweils exzentrisch angeordnet sind, so dass in einem verdrehentsicherten Zustand die Aufsteckelemente 1101 und 1102 bezüglich ihrer Schneidelemente 1105 einen durchmesserverstellbaren Schneidflugkreis haben, analog zu dem Aufsteckelement 2.

Die Außenträgerkreise 1900a und 1900b sind dabei aber auch zueinander exzentrisch angeordnet, und zwar in einem gleichen radialen Abstand 1901 bezüglich der Antriebsdrehachse 1106. Dadurch können die Schneidflugkreise unter einer zueinander gegenläufigen Drehung (Uhrzeigersinn und Gegenuhrzeigersinn) der Aufsteckelemente 1101 und 1102 bezüglich der Antriebsdrehachse 1106 durchmesserverstellt werden, so dass die Schneidelemente 1105 auf einen durchmessergleichen Schneidflugkreis verstellbar sind, der bezüglich der Antriebsdrehachse 1106 zentriert ist. So hat der Außenträgerkreis 1900a, dem die Trägerfläche 1190a folgt, ein Zentrum 1900c außerhalb von der Antriebsdrehachse 1106, und der Außenträgerkreis 1900b, dem die Trägerfläche 1190b folgt, ein Zentrum 1900d außerhalb von der Antriebsdrehachse 1106.

In Fig. 11 ist zusätzlich ein Innenträgerkreis 1300a gezeigt, dem der Innenträgerumfang 1103a in Blickrichtung parallel zur Antriebsdrehachse 1106 folgt und der bezüglich der Antriebsdrehachse 1106 in Blickrichtung parallel zur Antriebsdrehachse 1106 zentriert ist.

Fig. 12 zeigt ein weiteres Aufsteckelement 2000, das das Aufsteckelement 2 in dem Werkzeugsystem 1 ersetzen kann, indem das Aufsteckelement 2000 analog aufgesteckt, auszugsgesichert und verdrehgesichert wird, jeweils reversibel lösbar. Das Aufsteckelement 2000 hat einen Aufsteckkelchkörper 2000a zum Aufstecken auf den Zapfenabschnitt 9 und einen axial vorstehenden Kelchstielschaft 2000b. Der Kelchstielschaft 2000b hat einen Plattensitz 2500a, in dem ein Schneidelement 2500 reversibel lösbar befestigt ist. Das Schneidelement 2500 hat im auf dem Zapfenabschnitt 9 aufgesteckten Zustand einen durchmesserverstellbaren Schneidflugkreis, analog zu der in Fig. 6 gezeigten Schneidflugkreissituation.

Der Aufsteckkelchkörper 2000a hat außenumfangsseitig eine der Messskala 1107a analog Messskala 2107a.

## Patentansprüche

1. Werkzeugsystem (1, 1100), umfassend ein einschneidiges Aufsteckelement (2, 1101, 1102, 2000), einen Trägerkörper (3, 1103) und ein in dem Trägerkörper (3, 1103) oder in dem Aufsteckelement (2, 1101, 1102, 2000) ausgebildetes Hydrodehnelement (8, 1108), wobei das Aufsteckelement (2, 1101, 1102, 2000) auf den Trägerkörper (3, 1103) aufsteckbar und gegenüber diesem jeweils reversibel lösbar verdrehsicherbar und durch das Hydrodehnelement (8, 1108) reversibel lösbar auszugssicherbar ist, wobei das einschneidige Aufsteckelement (2, 1101, 1102) einem antriebsdrehachsenzentrierbaren und durchmesserverstellbaren Schneidflugkreis (501, 502) folgend schneidbar auf den Trägerkörper (3, 1103) aufsteckbar ist, indem der Trägerkörper (3, 1103) außenumfangsseitig einem bezüglich des Schneidflugkreises (501, 502) exzentrischen Außenträgerkreis (900, 1900a, 1900b) folgend ausgeformt ist.

2. Werkzeugsystem (1, 1100) nach Anspruch 1, wobei der Trägerkörper (3, 1103) einen Innenträgerumfang (3a, 1103a) zum Einstecken eines Einsteckschafts hat, wobei das Hydrodehnelement (8, 1108) in dem Trägerkörper (3, 1103) und/oder ein weiteres Hydrodehnelement in dem Trägerkörper (3, 1103) zur Bereitstellung einer reversibel lösbaren Auszugshemmung aufseiten des Innenträgerumfangs (3a, 1103a) ausgebildet ist.

3. Werkzeugsystem nach Anspruch 2, wobei der Innenträgerumfang (3a, 1103a) einem Innenträgerkreis (300, 1300a) folgend und sich entlang von einer des bezüglich Innenträgerkreises (300, 1300a) zentrierten Antriebsdrehachse (6, 1106) erstreckend ausgeformt ist.

4. Werkzeugsystem (1, 1100) nach einem der vorhergehenden Ansprüche, wobei das Werkzeugsystem (1, 1100) eine Messvorrichtung (7, 1107, 1117) zum Ablesen eines auf einem Durchmesser des Schneidflugkreises (501, 502) basierenden Messwerts umfasst.

5. Werkzeugsystem (1, 1100), nach Anspruch 4, wobei die Messvorrichtung (7, 1107, 1117) ein in Messabschnitte unterteiltes Skalenelement (7a, 1107a, 1117a) und ein Zeigerelement (7b, 1107b, 1117b) umfasst, wobei das Skalenelement (7a, 1107a, 1117a) relativ zu dem Zeigerelement (7b, 1107b, 1117b) drehbar ist, wenn das Aufsteckelement (2, 1101, 1102, 2000) gegenüber dem Trägerkörper (3, 1103) verdrehentsichert ist, wobei der Messwert durch die Summe der durch das Zeigerelement (7b, 1107b, 1117b) bezüglich einer Referenzdrehstellung überstrichenen Messabschnitte ablesbar bemessen ist.

6. Werkzeugsystem (1, 1100) nach einem der vorhergehenden Ansprüche, wobei das Werkzeugsystem (1, 1100) ein durch mehrere zueinander beabstandete Einsteckausnehmungen (10a) gebildetes Einsteckprofil (100) und ein Einsteckelement (10, 1010) umfasst, wobei das Einsteckprofil (100) in oder auf dem Aufsteckelement (2, 1101, 1102, 2000) und das Einsteckelement (10, 1010) in oder auf dem Trägerkörper (3, 1103) ausgebildet ist oder umgekehrt, wobei das Einsteckelement (10, 1010) in mindestens zwei oder mehr Einsteckausnehmungen (10a) von den Einsteckausnehmungen (10a) einsteckbar ist, wobei das Einsteckprofil (10) einem dem Schneidflugkreis (501, 502) konzentrischen Einsteckkreis (1000) folgend ausgebildet ist.

7. Werkzeugsystem (1, 1100) nach Anspruch 6, wobei das Einsteckelement (10, 1010) reversibel lösbar in oder auf dem Aufsteckelement (2, 1101, 1102, 2000) beziehungsweise dem Trägerkörper (3, 1103) gehaltert ist.

8. Werkzeugsystem (1, 1100) nach einem der vorhergehenden Ansprüche, wobei der Außenträgerkreis (900, 1900a, 1900b) gegenüber dem Schneidflugkreis (501, 502) in einem Bereich von 0,005 mm bis 0,1 mm exzentrisch angeordnet ist.

9. Werkzeugsystem (1, 1100) nach einem der vorhergehenden Ansprüche, wobei das Werkzeugsystem (1, 1100) ein weiteres Aufsteckelement (1101) umfasst, wobei das weitere Aufsteckelement (1101) auf den Trägerkörper (1103) aufsteckbar und gegenüber diesem jeweils reversibel lösbar verdrehsicherbar und reversibel lösbar auszugssicherbar ist, wobei das weitere Aufsteckelement (1101) einem weiteren durchmesserverstellbaren sowie bezüglich des Schneidflugkreises konzentrischen Schneidflugkreis folgend schneidbar auf den Trägerkörper (1103) aufsteckbar ist, indem der Trägerkörper (1103) außenumfangsseitig einem bezüglich des weiteren Schneidflugkreises exzentrischen weiteren Außenträgerkreis (1900b) folgend ausgeformt ist.

10. Werkzeugsystem (1, 1100) nach Anspruch 9, wobei der weitere Schneidflugkreis und der Schneidflugkreis (501, 502) auf betragsmäßig gleiche Durchmesser einstellbar sind.

11. Werkzeugsystem (1, 1100) nach einem der vorhergehenden Ansprüche, wobei das Aufsteckelement (2, 1101, 1102, 2000) ein reversibel lösbares Schneidelement (5, 1105, 2500) hat.

12. Werkzeugsystem (1, 1100) nach einem der vorhergehenden Ansprüche, wobei das Aufsteckelement (2000) einen Aufsteckkelchkörper (2000a) und einen Kelchstielschaft (2000b) hat, wobei der Aufsteckkelchkörper (2000a) auf den Trägerkörper (3) aufsteckbar ist, wobei der Kelchstielschaft (2000b) einschneidig ausgebildet ist.

13. Werkzeugsystem (1, 1100) nach einem der vorhergehenden Ansprüche, wobei das Aufsteckelement (2, 1101, 1102, 2000) auf den Trägerkörper (3, 1103) aufgesteckt und gegenüber diesem jeweils reversibel lösbar verdrehgesichert und durch das Hydrodehnelement (8, 1108) reversibel lösbar auszugsgesichert ist, wobei der Schneidflugkreis (501, 502) bezüglich einer Antriebsdrehachse (6, 1106) des Werkzeugsystems (1, 1100) zentriert und durchmesserverstellbar auf den Trägerkörper (3, 1103) dort aufgesteckt ist, wo der Trägerkörper (3, 1103) außenumfangsseitig dem bezüglich des Schneidflugkreises (501, 502) exzentrischen Außenträgerkreis (900, 1900a, 1900b) folgend ausgeformt ist.
